(19) Europäisches Patentamt
European Patent Office
Office européen des brevets

(11) EP 1 900 756 A1

(12) **EUROPÄISCHE PATENTANMELDUNG**

(43) Veröffentlichungstag:
**19.03.2008 Patentblatt 2008/12**

(21) Anmeldenummer: **06120685.0**

(22) Anmeldetag: **14.09.2006**

(51) Int Cl.:
***C08F 2/22*** *(2006.01)*
***C08F 210/14*** *(2006.01)*
***C08F 257/02*** *(2006.01)*
***C08F 251/02*** *(2006.01)*
***C09J 151/00*** *(2006.01)*
***C09J 151/02*** *(2006.01)*
***C09J 123/00*** *(2006.01)*

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(71) Anmelder: **BASF SE**
**67056 Ludwigshafen (DE)**

(72) Erfinder: **Venkatesh, Rajan, Dr.**
**68167 Mannheim (DE)**

(54) **Verfahren zur Herstellung einer wässrigen Polymerisatdispersion**

(57) Verfahren zur Herstellung einer wässrigen Polymerisatdispersion unter Verwendung von 4 bis 40 C-Atome aufweisenden Alkenen.

EP 1 900 756 A1

## Beschreibung

Gegenstand der vorliegenden Erfindung ist ein Verfahren zur Herstellung einer wässrigen Polymerisatdispersion durch radikalisch initiierte wässrige Emulsionspolymerisation von ethylenisch ungesättigten Monomeren in Anwesenheit wenigstens eines Dispergiermittels, wenigstens eines Radikalinitiators und wenigstens einer wasserlöslichen makromolekularen Wirtsverbindung, wobei zur Emulsionspolymerisation

| | |
|---|---|
| 1 bis 50 Gew.-% | eines 4 bis 40 C-Atome aufweisenden Alkens [Monomer A], und |
| 50 bis 99 Gew.-% | eines Esters auf Basis einer 3 bis 6 C-Atome aufweisenden α,β-monoethylenisch ungesättigten Mono- oder Dicarbonsäure und eines 1 bis 12 C-Atome aufweisenden Alkanols [Monomer B], sowie gegebenenfalls |
| 0 bis 10 Gew.-% | einer 3 bis 6 C-Atome aufweisenden α,β-monoethylenisch ungesättigten Mono- oder Dicarbonsäure und/oder deren Amid [Monomer C] und |
| 0 bis 25 Gew.-% | einer sich von den Monomeren A bis C unterscheidenden α,β-ethylenisch ungesättigten Verbindung [Monomer D], |

eingesetzt werden und sich die Monomeren A bis D zu 100 Gew.-% [Gesamtmonomerenmenge] addieren, und wobei

| | |
|---|---|
| 0,1 bis 20 Gew.-% | einer wasserlöslichen makromolekularen Wirtsverbindung, welche einen hydrophoben Hohlraum und eine hydrophile Hülle aufweist, bezogen auf die Gesamtmonomerenmenge, |

eingesetzt werden, welches dadurch gekennzeichnet ist, dass wenigstens 50 Gew.-% der Gesamtmenge an makromolekularer Wirtsverbindung, wenigstens 50 Gew.-% der Gesamtmenge an Monomer A und optional bis zu jeweils 10 Gew.-% der Gesamtmengen an Monomeren B bis D im Polymerisationsgefäß vor Initiierung der Polymerisationsreaktion vorgelegt werden und die gegebenenfalls verbliebenen Restmengen an makromolekularer Wirtsverbindung und/oder an Monomer A sowie die Gesamtmengen bzw. die gegebenenfalls verbliebenen Restmengen der Monomeren B bis D dem Polymerisationsgefäß unter Polymerisationsbedingungen zugeführt werden.

Verfahren zur Herstellung von Polymerisaten auf Basis von Alkenen und anderen copolymerisierbaren ethylenisch ungesättigten Verbindungen sind dem Fachmann hinreichend bekannt. Dabei erfolgt die Copolymerisation im wesentlichen in Form einer Lösungspolymerisation (siehe beispielsweise A. Sen et al., Journal American Chemical Society, 2001, 123, Seiten 12738 bis 12739; B. Klumperman et al., Macromolecules, 2004, 37, Seiten 4406 bis 4416; A. Sen et al., Journal of Polymer Science, Part A: Polymer Chemistry, 2004, 42(24), Seiten 6175 bis 6192; WO 03/042254, WO 03/091297 oder EP-A 1384729) oder in Form einer wässrigen Emulsionspolymerisation, wobei diese insbesondere auf Basis des niedrigsten Alkens Ethen erfolgt (siehe beispielsweise US-A 4921898, US-A 5070134, US-A 5110856, US-A 5629370, EP-A 295727, EP-A 757065, EP-A 1114833 oder DE-A 19620817).

Zur radikalisch initiierten wässrigen Emulsionspolymerisation unter Verwendung höherer Alkene ist von nachfolgendem Stand der Technik auszugehen.

In der DE-OS 1720277 wird ein Verfahren zur Herstellung von filmbildenden wässrigen Polymerisatdispersionen unter Verwendung von Vinylestern und 1-Octen offenbart. Dabei kann das Gewichtsverhältnis von Vinylester zu 1-Octen von 99:1 bis 70:30 betragen. Optional können die Vinylester im untergeordneten Maße im Gemisch mit anderen copolymerisierbaren ethylenisch ungesättigten Verbindungen zur Emulsionspolymerisation eingesetzt werden.

S.M. Samoilov beschreibt in J. Macromol. Sci. Chem., 1983, A19(1), Seiten 107 bis 122, die radikalisch initiierte wässrige Emulsionspolymerisation von Propen mit unterschiedlichen ethylenisch ungesättigen Verbindungen. Dabei wurde als Ergebnis festgehalten, dass die Copolymerisation von Propen mit ethylenisch ungesättigten Verbindungen, welche stark elektronenziehende Gruppen aufweisen, wie beispielsweise Chlortrifluorethylen, Trifluoracrylonitril, Maleinsäureanhydrid oder Methyltrifluoracrylat, Polymerisate mit einem deutlich höheren Propenanteil bzw. Copolymerisate mit höheren Molekulargewichten lieferten, als bei Verwendung der bei der radikalisch initiierten wässrigen Emulsionspolymerisation üblichen ethylenisch ungesättigten Verbindungen Vinylacetat, Vinylchlorid, Acrylsäuremethyl- bzw. -butylester. Dieses Verhalten wird insbesondere mit den bei den höheren Alkenen üblichen Wasserstoffradikalübetragungsreaktionen begründet.

Die Herstellung wässriger Polymerisatdispersionen auf Basis unterschiedlicher, extrem wasserunlöslicher Monomerer durch radikalisch initiierte Emulsionspolymerisation unter Verwendung von Wirtsverbindungen wird in US-A 5521266 und EP-A 780401 offenbart.

In der von der Anmelderin unter dem Anmeldekennzeichen DE 102005035692.3 eingereichten deutschen Patentanmeldung wird die Herstellung von wässrigen Polymerisatdispersionen auf der Basis 5 bis 12 C-Atome aufweisender Alkene offenbart. Dabei werden die 5 bis 12 C-Atome aufweisenden Alkene dem Polymerisationsgemisch unter

Polymerisationsbedingungen zudosiert.

Der vorliegenden Erfindung lag die Aufgabe zugrunde, das in der deutschen Patentanmeldung DE 102005035692.3 offenbarte Herstellverfahren für wässrige Polymerisatdispersionen hinsichtlich der erzielbaren Monomerumsätzen zu verbessern und die Anwendbarkeit des Herstellverfahrens auf die höhermolekularen Alkene auszuweiten.

Überraschender Weise wurde die Aufgabe durch das eingangs definierte Verfahren gelöst.

Die Durchführung von radikalisch initiierten Emulsionspolymerisationen von ethylenisch ungesättigten Monomeren in einem wässrigen Medium ist vielfach vorbeschrieben und dem Fachmann daher hinreichend bekannt [vgl. hierzu Emulsionspolymerisation in Encyclopedia of Polymer Science and Engineering, Vol. 8, Seiten 659 ff. (1987); D.C. Blackley, in High Polymer Latices, Vol. 1, Seiten 35 ff. (1966); H. Warson, The Applications of Synthetic Resin Emulsions, Kapitel 5, Seiten 246 ff. (1972); D. Diederich, Chemie in unserer Zeit 24, Seiten 135 bis 142 (1990); Emulsion Polymerisation, Interscience Publishers, New York (1965); DE-A 40 03 422 und Dispersionen synthetischer Hochpolymerer, F. Hölscher, Springer-Verlag, Berlin (1969)]. Die radikalisch initiierten wässrigen Emulsionspolymerisationsreaktionen erfolgen üblicherweise dergestalt, dass man die ethylenisch ungesättigten Monomere unter Mitverwendung von Dispergiermitteln, im wässrigen Medium in Form von Monomerentröpfchen dispers verteilt und mittels eines radikalischen Polymerisationsinitiators polymerisiert. Von dieser Verfahrensweise unterscheidet sich das vorliegende Verfahren lediglich im Einsatz einer spezifischen Monomerenzusammensetzung und einer wasserlöslichen makromolekularen Wirtsverbindung sowie deren spezifischer Einsatz.

Im vorliegenden erfindungsgemäßen Verfahren wird Wasser, häufig in Trinkwasserqualität, insbesondere bevorzugt jedoch entionisiertes Wasser verwendet, dessen Gesamtmenge so bemessen wird, dass sie ≥ 30 und ≤ 90 Gew.-% und vorteilhaft ≥ 40 und ≤ 75 Gew.-%, jeweils bezogen auf die durch das erfindungsgemäße Verfahren zugängliche wässrige Polymerisatdispersion, beträgt.

Erfindungsgemäß ist es möglich, eine Teil- oder die Gesamtmenge an Wasser im Polymerisationsgefäß vorzulegen und die gegebenenfalls verbliebene Restmenge an Wasser nach Initiierung der Polymerisationsreaktion zuzudosieren. Dabei kann die gegebenenfalls verbliebene Restmenge an Wasser dem Polymerisationsgefäß diskontinuierlich in einer oder mehrerer Portionen oder kontinuierlich mit gleichbleibenden oder sich verändernden Mengenströmen zudosiert werden. Insbesondere vorteilhaft erfolgt die Dosierung an Wasser kontinuierlich mit gleichbleibenden Mengenströmen, insbesondere als Bestandteil einer wässrigen Monomerenemulsion und/oder einer wässrigen Lösung des Radikalstarters.

Als Monomere A können alle linearen oder cyclischen 5 bis 40 C-Atome, bevorzugt 10 bis 30 C-Atome und insbesondere bevorzugt 12 bis 24 C-Atome aufweisenden Alkene eingesetzt werden, welche sich radikalisch copolymerisieren lassen und welche neben Kohlenstoff und Wasserstoff keine weiteren Elemente aufweisen. Hierzu zählen beispielsweise die linearen Alkene n-Buten-1, n-Buten-2, 2-Methylpropen, 2-Methylbuten-1, 3-Methylbuten-1, 3,3-Dimethyl-2-isopropylbuten-1, 2-Methylbuten-2, 3-Methylbuten-2, Penten-1, 2-Methylpenten-1, 3-Methylpenten-1, 4-Methylpenten-1, Penten-2, 2-Methylpenten-2, 3-Methylpenten-2, 4-Methylpenten-2, 2-Ethylpenten-1, 3-Ethylpenten-1, 4-Ethylpenten-1, 2-Ethylpenten-2, 3-Ethylpenten-2, 4-Ethylpenten-2, 2,4,4-Trimethylpenten-1, 2,4,4-Trimethylpenten-2, 3-Ethyl-2-methylpenten-1, 3,4,4-Trimethylpenten-2, 2-Methyl-3-ethylpenten-2, Hexen-1, 2-Methylhexen-1, 3-Methylhexen-1, 4-Methylhexen-1, 5-Methylhexen-1, Hexen-2, 2-Methylhexen-2, 3-Methylhexen-2, 4-Methylhexen-2, 5-Methylhexen-2, Hexen-3, 2-Methylhexen-3, 3-Methylhexen-3, 4-Methylhexen-3, 5-Methylhexen-3, 2,2-Dimethylhexen-3, 2,3-Dimethylhexen-2, 2,5-Dimethylhexen-3, 2,5-Dimethylhexen-2, 3,4-Dimethylhexen-1, 3,4-Dimethylhexen-3, 5,5-Dimethylhexen-2, 2,4-Dimethylhexen-1, Hepten-1, 2-Methylhepten-1, 3-Methylhepten-1, 4-Methylhepten-1, 5-Methylhepten-1, 6-Methylhepten-1, Hepten-2, 2-Methylhepten-2, 3-Methylhepten-2, 4-Methylhepten-2, 5-Methylhepten-2, 6-Methylhepten-2, Hepten-3, 2-Methylhepten-3, 3-Methylhepten-3, 4-Methylhepten-3, 5-Methylhepten-3, 6-Methylhepten-3, 6,6-Dimethylhepten-1, 3,3-Dimethylhepten-1, 3,6-Dimethylhepten-1, 2,6-Dimethylhepten-2, 2,3-Dimethylhepten-2, 3,5-Dimethylhepten-2, 4,5-Dimethylhepten-2, 4,6-Dimethylhepten-2, 4-Ethylhepten-3, 2,6-Dimethylhepten-3, 4,6-Dimethylhepten-3, 2,5-Dimethylhepten-4, Octen-1, 2-Methylocten-1, 3-Methylocten-1, 4-Methylocten-1, 5-Methylocten-1, 6-Methylocten-1, 7-Methylocten-1, Octen-2, 2-Methylocten-2, 3-Methylocten-2, 4-Methylocten-2, 5-Methylocten-2, 6-Methylocten-2, 7-Methylocten-2, Octen-3, 2-Methylocten-3, 3-Methylocten-3, 4-Methylocten-3, 5-Methylocten-3, 6-Methylocten-3, 7-Methylocten-3,Octen-4, 2-Methylocten-4, 3-Methylocten-4, 4-Methylocten-4, 5-Methylocten-4, 6-Methylocten-4, 7-Methylocten-4, 7,7-Dimethylocten-1, 3,3-Dimethylocten-1, 4,7-Dimethylocten-1, 2,7-Dimethylocten-2, 2,3-Dimethylocten-2, 3,6-Dimethylocten-2, 4,5-Dimethylocten-2, 4,6-Dimethylocten-2, 4,7-Dimethylocten-2, 4-Ethylocten-3, 2,7-Dimethylocten-3, 4,7-Dimethylocten-3, 2,5-Dimethylocten-4, Nonen-1, 2-Methylnonen-1, 3-Methylnonen-1, 4-Methylnonen-1, 5-Methylnonen-1, 6-Methylnonen-1, 7-Methylnonen-1, 8-Methylnonen-1, Nonen-2, 2-Methylnonen-2, 3-Methylnonen-2, 4-Methylnonen-2, 5-Methylnonen-2, 6-Methylnonen-2, 7-Methylnonen-2, 8-Methylnonen-2, Nonen-3, 2-Methylnonen-3, 3-Methylnonen-3, 4-Methylnonen-3, 5-Methylnonen-3, 6-Methylnonen-3, 7-Methylnonen-3, 8-Methylnonen-3, Nonen-4, 2-Methylnonen-4, 3-Methylnonen-4, 4-Methylnonen-4, 5-Methylnonen-4, 6-Methylnonen-4, 7-Methylnonen-4, 8-Methylnonen-4, 4,8-Dimethylnonen-1, 4,8-Dimethylnonen-4, 2,8-Dimethylnonen-4, Decen-1, 2-Methyldecen-1, 3-Methyldecen-1, 4-Methyldecen-1, 5-Methyldecen-1, 6-Methyldecen-1, 7-Methyldecen-1, 8-Methyldecen-1, 9-Methyldecen-1 Decen-2, 2-Methyldecen-2, 3-Methyldecen-2, 4-Methyldecen-2, 5-Methyldecen-2, 6-Methyldecen-2, 7-Methyldecen-2, 8-Methyldecen-2, 9-Methyldecen-2, Decen-3, 2-Methyldecen-3, 3-Methyldecen-3, 4-Methyldecen-3, 5-Methyldecen-3, 6-Methyldecen-3, 7-Methyldecen-3, 8-Methyldecen-3, 9-Methyldecen-3, Decen-4, 2-Methyldecen-4, 3-Methyldecen-4, 4-Methyldecen-4, 5-Methyldecen-4, 6-Methyldecen-4, 7-Methyldecen-4, 8-Methyldecen-4, 9-Methyldecen-4, Decen-5, 2-Methyldecen-5, 3-Methyldecen-5, 4-Methyldecen-5, 5-Methyldecen-5, 6-Methyldecen-5, 7-Methyldecen-5, 8-Methyldecen-5, 9-Methyldecen-5, 2, 4-Dimethyldecen-1, 2,4-Dimethyldecen-2, 4,8-Dimethyldecen-1, Undecen-1, 2-Methylundecen-1, 3-Methylundecen-1, 4-Methylundecen-1, 5-Methylundecen-1, 6-Methylundecen-1, 7-Methylundecen-1, 8-Methylundecen-1, 9-Methylundecen-1, 10-Methylundecen-1, Undecen-2, 2-Methylundecen-2, 3-Methylundecen-2, 4-Methylundecen-2, 5-Methylundecen-2, 6-Methylundecen-2, 7-Methylundecen-2, 8-Methylundecen-2, 9-Methylundecen-2, 10-Methylundecen-2, Undecen-3, 2-Methylundecen-3, 3-Methylundecen-3, 4-Methylundecen-3, 5-Methylundecen-3, 6-Methylundecen-3, 7-Methylundecen-3, 8-Methylundecen-3, 9-Methylundecen-3, 10-Methylundecen-3, Undecen-4, 2-Methylundecen-4, 3-Methylundecen-4, 4-Methylundecen-4, 5-Methylundecen-4, 6-Methylundecen-4, 7-Methylundecen-4, 8-Methylundecen-4, 9-Methylundecen-4, 10-Methylundecen-4, Undecen-5, 2-Methylundecen-5, 3-Methylundecen-5, 4-Methylundecen-5, 5-Methylundecen-5, 6-Methylundecen-5, 7-Methylundecen-5, 8-Methylundecen-5, 9-Methylundecen-5, 10-Methylundecen-5, Dodecen-1, Dodecen-2, Dodecen-3, Dodecen-4, Dodecen-5, Dodecen-6, 4,8-Dimethyldecen-1, 4-Ethyldecen-1, 6-Ethyldecen-1, 8-Ethyldecen-1, 2,5,8-Trimethylnonen-1, Tridecen-1, Tridecen-2, Tridecen-3, Tridecen-4, Tridecen-5, Tridecen-6, 2-Methyldodecen-1, 11-Methyldodecen-1, 2,5-Dimethylundecen-2, 6, 10-Dimethylundecen-1, Tetradecen-1, Tetradecen-2, Tetradecen-3, Tetradecen-4, Tetradecen-5, Tetradecen-6, Tetradecen-7, 2-Methyltridecen-1, 2-Ethyldodecen-1, 2,6,10-Trimethylundecen-1, 2,6-Dimethyldodecen-2, 11-Methyltridecen-1, 9-Methyltridecen-1, 7-Methyltridecen-1, 8-Ethyldodecen-1, 6-Ethyldodecen-1, 4-Ethyldodecen-1, 6-Butyldecen-1, Pentadecen-1, Pentadecen-2, Pentadecen-3, Pentadecen-4, Pentadecen-5, Pentadecen-6, Pentadecen-7, 2-Methyltetradecen-1, 3,7,11-Trimethyldodecen-1, 2,6,10-Trimethyldodecen-1, Hexadecen-1, Hexadecen-2, Hexadecen-3, Hexadecen-4, Hexadecen-5, Hexadecen-6, Hexadecen-7, Hexadecen-8, 2-Methylpentadecen-1, 3,7,11-Trimethyltridecene-1, 4,8,12-Trimethyltridecen-1, 11-Methylpentadecen-1, 13-Methylpentadecen-1, 7-Methylpentadecen-1, 9-Methylpentadecen-1, 12-Ethyltetradecen-1, 8-Ethyltetradecen-1, 4-Ethyltetradecen-1, 8-Butyldodecen-1, 6-Butyldodecen-1 Heptadecen-1, Heptadecen-2, Heptadecen-3, Heptadecen-4, Heptadecen-5, Heptadecen-6, Heptadecen-7, Heptadecen-8, 2-Methylhexadecen-1, 4,8,12-Trimethyltetradecene-1, Octadecen-1, Octadecen-2, Octadecen-3, Octadecen-4, Octadecen-5, Octadecen-6, Octadecen-7, Octadecen-8, Octadecen-9, 2-Methylheptadecen-1, 13-Methylheptadecen-1, 10-Butyltetradecen-1, 6-Butyltetradecen-1, 8-Butyltetradecen-1, 10-Ethlyhexadecen-1, Nonadecen-1, Nonadecen-2, 1-Methyloctadecen-1, 7,11,15-Trimethylhexadecen-1, Eicosen-1, Eicosen-2, 2,6,10,14-Tetramethylhexadecen-2, 3,7,11,15-Tetramethylhexadecen-2, 2,7,11,15-Tetramethylhedecen-1, Docosen-1, Docosen-2, Docosen-7, 4,9,13, 17-Tetramethyloctadecen-1, Tetracosen-1, Tetracosen-2, Tetracosen-9, Hexacosene-1, Hexacosene-2, Hexacosene-9, Triacontene-1, Dotriacontene-1 oder Tritriaconten-1 sowie die cyclischen Alkene Cyclopenten, 2-Methylcyclopenten-1, 3-Methylcyclopenten-1, 4-Methylcyclopenten-1, 3-Butylcyclopenten-1, Vinylcyclopentan, Cyclohexen, 2-Methylcyclohexen-1, 3-Methylcyclohexen-1, 4-Methylcyclohexen-1, 1,4-Dimethylcyclohexen-1, 3,3,5-Trimethylcyclohexen-1, 4-Cyclopentylcyclohexen-1, Vinylcyclohexan, Cyclohepten, 1,2-Dimethylcyclohepten-1, Cycloocten, 2-Methylcycloocten-1, 3-Methylcycloocten-1, 4-Methylcycloocten-1, 5-Methylcycloocten-1, Cyclononen, Cyclodecen, Cycloundecen, Cyclododecen, Bicyclo[2.2.1]hepten-2, 5-Ethylbicyclo[2.2.1]hepten-2, 2-Methylbicyclo[2.2.2]octen-2, Bicyclo [3.3.1]nonen-2 oder Bicyclo[3.2.2]nonen-6.

Bevorzugt werden die 1-Alkene eingesetzt, beispielsweise Penten-1, Hexen-1, Hepten-1, Octen-1, Nonen-1, Decen-1, Undecen-1, Dodecen-1, 2,4,4-Trimethylpenten-1, 2, 4-Dimethylhexen-1, 6,6-Dimethylhepten-1, 2-Methylocten-1, Tridecen-1, Tetradecen-1, Hexadecen-1, Heptadecen-1, Octadecen-1, Nonadecen-1, Eicosen-1, Docosen-1, Tetracosen-1, 2,6-Dimethyldodecen-1, 6-Butyldecen-1, 4,8,12-Trimethyldecen-1 oder 2-Methylheptadecen-1. Vorteilhaft wird als Monomer A ein 10 bis 30 C-Atome aufweisendes Alken, bevorzugt ein 12 bis 24 C-Atome aufweisendes 1-Alken eingesetzt. Insbesondere bevorzugt werden Dodecen-1, Tridecen-1, Tetradecen-1, Hexadecen-1, Heptadecen-1, Octadecen-1, Nonadecen-1, Eicosen-1, Docosen-1 oder Tetracosen-1 eingesetzt. Selbstverständlich können auch Gemische vorgenannter Monomere A eingesetzt werden.

Als Monomere B finden Ester auf Basis einer 3 bis 6 C-Atome, insbesondere einer 3 oder 4 C-Atome aufweisenden $\alpha,\beta$-monoethylenisch ungesättigten Mono- oder Dicarbonsäure, wie insbesondere Acrylsäure, Methacrylsäure, Maleinsäure, Fumarsäure und Itaconsäure und eines 1 bis 12 C-Atome aufweisenden Alkanols, vorzugsweise eines 1 bis 8 C-Atome aufweisenden Alkanols und insbesondere eines 1 bis 4 C-Atome aufweisenden Alkanols, wie insbesondere Methanol, Ethanol, n-Propanol, isoPropanol, n-Butanol, 2-Methylpropanol-1, tert.-Butanol, n-Pentanol, 3-Methylbutanol-1, n-Hexanol, 4-Methylpentanol-1, n-Heptanol, 5-Methylhexanol-1, n-Octanol, 6-Methylheptanol-1, n-Nonanol, 7-Methyloctanol-1, n-Decanol, 8-Methylnonanol-1, n-Dodecanol, 9-Methyldecanol-1 oder 2-Ethylhexanol-1 Verwendung. Vorzugsweise werden Acrylsäure- und Methacrylsäuremethyl-, -ethyl-, -n-butyl-, -iso-butyl-, pentyl-, -hexyl-, -heptyl-, -octyl-, -nonyl-, -decyl-, -2-ethylhexyl-, oder dodecylester, Fumar- und Maleinsäuredimethylester oder -di-n-butylester eingesetzt. Selbstverständlich können auch Gemische vorgenannter Ester eingesetzt werden.

Als Monomere C werden optional 3 bis 6 C-Atome aufweisende $\alpha,\beta$-monoethylenisch ungesättigte Mono- oder

Dicarbonsäuren und/oder deren Amide, wie insbesondere Acrylsäure, Methacrylsäure, Maleinsäure, Fumarsäure oder Itaconsäure bzw. Acrylamid oder Methacrylamid eingesetzt. Selbstverständlich können auch Gemische vorgenannter Monomere C eingesetzt werden.

Als Monomere D, welche sich von den Monomeren A bis C unterscheiden, finden beispielsweise α,β-ethylenisch ungesättigte Verbindungen, wie beispielsweise vinylaromatische Monomere, wie Styrol, α-Methylstyrol, o-Chlorstyrol oder Vinyltoluole, Vinylhalogenide, wie Vinylchlorid oder Vinylidenchlorid, Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat, Nitrile α,β-mono- oder diethylenisch ungesättigter Carbonsäuren, wie Acrylnitril, Methacrylnitril, Fumarsäuredinitril, Maleinsäuredinitril sowie 4 bis 8 C-Atome aufweisende konjugierte Diene, wie 1,3-Butadien und Isopren, darüber hinaus Vinylsulfonsäure, 2-Acrylamido-2-methylpropansulfonsäure, Styrolsulfonsäure und deren wasserlösliche Salze sowie N-Vinylpyrrolidon, 2-Vinylpyridin, 4-Vinylpyridin, 2-Vinylimidazol, 2-(N,N-Dimethylamino)ethylacrylat, 2-(N,N-Dimethylamino) ethylmethacrylat, 2-(N,N-Diethylamino)ethylacrylat, 2-(N,N-Diethylamino)ethylmethacrylat, 2-(N-tert.-Butylamino)ethylmethacrylat, N-(3-N',N'-Dimethylaminopropyl)methacrylamid oder 2-(1-Imidazolin-2-onyl)ethylmethacrylat Verwendung. Weitere Monomere D weisen wenigstens eine Epoxy-, Hydroxy-, N-Methylol- oder Carbonylgruppe, oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit α,β-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. In diesem Zusammenhang von besonderer Bedeutung sind auch die Methacrylsäure- und Acrylsäure-$C_1$-$C_8$-Hydroxyalkylester wie n-Hydroxyethyl-, n-Hydroxypropyl- oder n-Hydroxybutylacrylat und -methacrylat sowie Verbindungen, wie Glycidylacrylat oder -methacrylat, Diacetonacrylamid und Acetylacetoxyethylacrylat bzw. -methacrylat. Selbstverständlich können auch Gemische von Monomeren D eingesetzt werden. Häufig beträgt die Menge an Monomeren D 0,1 bis 20 Gew.-% und oft 0,2 bis 10 Gew.-%, jeweils bezogen auf die Gesamtmonomerenmenge.

Bevorzugt werden jedoch zur radikalisch initiierten wässrigen Emulsionspolymerisation

| | |
|---|---|
| 1 bis 49,99 Gew.-% | Monomere A, und |
| 50 bis 98,99 Gew.-% | Monomere B, sowie |
| 0,01 bis 10 Gew.-% | Monomere C |

eingesetzt. Als Monomere A werden insbesondere Dodecen-1, Tridecen-1, Tetradecen-1, Hexadecen-1, Heptadecen-1 und/oder Octadecen-1, als Monomere B insbesondere n-Butylacrylat, Methylacrylat, 2-Ethylhexylacrylat, Methylmethacrylat und/oder tert.-Butylacrylat und als Monomere C insbesondere Acrylsäure, Methacrylsäure und/oder Itaconsäure eingesetzt.

Insbesondere bevorzugt werden zur radikalisch initiierten wässrigen Emulsionspolymerisation

| | |
|---|---|
| 5 bis 44,9 Gew.-% | Dodecen-1 und/oder Octadecen-1 [Monomere A], und |
| 55 bis 94,9 Gew.-% | n-Butylacrylat, Methylacrylat, 2-Ethylhexylacrylat, Methylmethacrylat und/oder tert.-Butylacrylat [Monomere B], sowie |
| 0,1 bis 4 Gew.-% | Acrylsäure und/oder Methacrylsäure [Monomere C], |

eingesetzt.

Erfindungswesentlich ist, dass während der Polymerisation in wässrigem Medium wenigstens eine wasserlösliche makromolekulare Wirtsverbindung mit einem hydrophoben Hohlraum und einer hydrophile Hülle anwesend ist. Unter einer wasserlöslichen makromolekularen Wirtsverbindung sollen in dieser Schrift solche Wirtsverbindungen verstanden werden, welche bei 25 °C und 1 atm (= 1,013 bar absolut) eine Löslichkeit von ≥ 10 g pro Liter Wasser aufweisen. Günstig ist es, wenn die Löslichkeit der makromolekularen Wirtsverbindungen unter den vorgenannten Bedingungen ≥ 25 g/l, ≥ 50 g/l, ≥ 100 g/l, ≥ 200 g/l oder ≥ 300 g/l beträgt. Als wasserlösliche makromolekulare Wirtsverbindungen sind vorteilhaft beispielsweise Calixarene, cyclische Oligosaccharide, nichtcyclische Oligosaccharide und/oder deren Derivate einsetzbar. Selbstverständlich sind auch Gemische vorgenannter makromolekularer Wirtsverbindungen einsetzbar.

Erfindungsgemäß einsetzbare Calixarene sind in der US-A 4,699,966, der internationalen Patentanmeldung

WO 89/08092 sowie den japanischen Patentschriften 1988/197544 und 1989/007837 beschrieben.

Als cyclische Oligosaccharide können beispielsweise die von Takai et al., Journal of Organic Chemistry, 1994, 59(11), Seiten 2967 bis 2975, beschriebenen Cycloinulohexose und -heptose aber auch Cyclodextrine und/oder deren Derivate eingesetzt werden.

Besonders geeignete Cyclodextrine sind α-Cyclodextrin, β-Cyclodextrin oder γ-Cyclodextrin sowie deren Methyl-, Triacetyl- Hydroxypropyl- oder Hydroxyethylderivate. Insbesondere bevorzugt sind die im Handel erhältlichen underivatisierten Verbindungen, Cavamax® W6, Cavamax® W7 oder Cavamax® W8, die teilmethylierten Verbindungen Cavasol® W6M, Cavasol® W7M oder Cavasol® W8M sowie die teilhydroxypropylierten Verbindungen Cavasol® W6HP, Cavasol® W7HP oder Cavasol® W8HP (Marken der Wacker Chemie AG, Deutschland).

Als nichtcyclische Oligosaccharide finden beispielsweise Stärken und/oder deren Abbauprodukte Verwendung.

Bei den in Wasser löslichen Stärken oder Stärkeabbauprodukten handelt es sich häufig um native Stärken, die durch Kochen mit Wasser wasserlöslich gemacht worden sind, oder um Stärkeabbauprodukte, die durch Hydrolyse, insbesondere durch sauer katalysierte Hydrolyse, enzymatisch katalysierte Hydrolyse oder Oxidation aus den nativen Stärken gewonnen werden. Derartige Abbauprodukte werden auch als Dextrine, Röstdextrine oder verzuckerte Stärken bezeichnet. Ihre Herstellung aus nativen Stärken ist dem Fachmann bekannt und beispielsweise in G. Tegge, Stärke und Stärkederivate, EAS Verlag, Hamburg 1984, Seiten 173ff. und Seiten 220ff. sowie in der EP-A 0441 197 beschrieben. Als native Stärken können praktisch alle Stärken pflanzlicher Herkunft, beispielsweise Stärken aus Mais, Weizen, Kartoffeln, Tapioka, Reis, Sago und Sorghumhirse eingesetzt werden.

Erfindungsgemäß finden auch chemisch modifizierte Stärken oder Stärkeabbauprodukte Verwendung. Unter chemisch modifizierten Stärken oder Stärkeabbauprodukte sind solche Stärken oder Stärkeabbauprodukte zu verstehen, in denen die OH-Gruppen wenigstens teilweise in derivatisierter, z. B. in veretherter oder veresterter Form vorliegen. Die chemische Modifizierung kann sowohl an den nativen Stärken als auch an den Abbauprodukten vorgenommen werden. Ebenso ist es möglich, die chemisch modifizierten Stärken im nachhinein in ihre chemisch modifizierten Abbauprodukte zu überführen.

Die Veresterung von Stärke bzw. Stärkeabbauprodukten kann sowohl mit anorganischen als auch organischen Säuren, deren Anhydriden oder deren Chloriden erfolgen. Übliche veresterte Stärken sind phosphatierte und/oder acetylierte Stärken bzw. Stärkeabbauprodukte. Eine Veretherung der OH-Gruppen kann beispielsweise mit organischen Halogenverbindungen, Epoxiden oder Sulfaten in wässriger alkalischer Lösung erfolgen. Beispiele für geeignete Ether sind Alkylether, Hydroxyalkylether, Carboxyalkylether, Allylether und kationisch modifizierte Ether, z.B. (Trisalkylammonium) alkylether und (Trisalkylammonium)hydroxyalkylether. Je nach Art der chemischen Modifizierung können die Stärken bzw. die Stärkeabbauprodukte neutral, kationisch, anionisch oder amphiphil sein. Die Herstellung modifizierter Stärken und Stärkeabbauprodukte ist dem Fachmann bekann (vgl. Ullmann's Encyclopedia of Industrial Chemistry, 5th ed., Bd. 25, Seiten 12 bis 21 und dort zitierte Literatur).

In einer bevorzugten Ausführungsform der vorliegenden Erfindung werden wasserlösliche Stärkeabbauprodukte und ihre chemisch modifizierten Derivate, die durch Hydrolyse, Oxidation oder enzymatischen Abbau von nativen Stärken oder chemisch modifizierten Stärkederivaten erhältlich sind, verwendet. Derartige Stärkeabbauprodukte werden auch als "verzuckerte Stärken" bezeichnet (vgl. G. Tegge, Seiten 220ff.). Verzuckerte Stärken und ihre Derivate sind als solche im Handel erhältlich (z. B. C*Pur®-Produkte 01906, 01908, 01910, 01912, 01915, 01921, 01924, 01932 oder 01934 der Cerestar Deutschland GmbH, Krefeld) oder können durch Abbau handelsüblicher Stärken nach bekannten Methoden, beispielsweise durch oxidative Hydrolyse mit Peroxiden oder enzymatische Hydrolyse aus den Stärken oder chemisch modifizierten Stärken hergestellt werden. Besonders bevorzugt sind hydrolytisch zugängliche Stärkeabbauprodukte, die chemisch nicht weiter modifiziert sind.

In einer besonders bevorzugten Ausführungsform der vorliegenden Erfindung werden Stärkeabbauprodukte bzw. chemisch modifizierte Stärkeabbauprodukte mit einem gewichtsmittleren Molekulargewicht Mw im Bereich von 1000 bis 30000 Dalton und ganz bevorzugt im Bereich von 3000 bis 10000 Dalton verwendet. Derartige Stärken sind bei 25 °C und 1 bar in Wasser vollständig löslich, wobei die Löslichkeitsgrenze in der Regel oberhalb 50 Gew.-% liegt, was sich für die Herstellung der erfindungsgemäßen Copolymerisate in wässrigem Medium als besonders günstig erweist. Vorteilhaft werden erfindungsgemäß insbesondere C*Pur® 01906 ($M_w$ ca. 20000) und C*Pur® 01934 ($M_w$ ca. 3000) eingesetzt.

Angaben über das Molekulargewicht der erfindungsgemäß zu verwendenden verzuckerten Stärken beruhen auf Bestimmungen mittels Gelpermeationschromatographie unter folgenden Bedingungen:

| | |
|---|---|
| Säulen: | 3 Stück 7,5 x 600 mm Stahl gefüllt mit TSK-Gel G 2000 PW und G 4000 PW. Porenweite 5 µm |
| Eluent: | entionisiertes Wasser |
| Temperatur: | 20 bis 25 °C (Raumtemperatur) |
| Detektion: | Differentialrefraktometer (z. B. ERC 7511) |
| Fluss: | 0,8 ml/min. Pumpe: (z.B. ERC 64.00) |

(fortgesetzt)

| | |
|---|---|
| Injektionsventil: | 20 µl Ventil: (z.B. VICI 6-Wege-Ventil) |
| Auswertung: | Bruker Chromstar GPC-Software |
| Eichung: | Die Eichung erfolgte im niedermolekularen Bereich mit Glucose, Raffinose, Maltose und Maltopentose. Für den höhermolekularen Bereich wurden Pullulan-Standards mit einer Polydispersität < 1,2 verwendet. |

Die im erfindungsgemäßen Verfahren eingesetzte Menge an wasserlöslicher makromolekularer Wirtsverbindung beträgt 0,1 bis 20 Gew.-%, bevorzugt 0,2 bis 15 Gew.-% und insbesondere bevorzugt 0,5 bis 10 Gew.-%, jeweils bezogen auf die Gesamtmonomerenmenge.

Verfahrenswesentlich ist, dass wenigstens 50 Gew.-% der Gesamtmenge an wasserlöslicher makromolekularer Wirtsverbindung, wenigstens 50 Gew.-% der Gesamtmenge an Monomeren A und optional bis zu jeweils 10 Gew.-% der Gesamtmengen an Monomeren B bis D im Polymerisationsgefäß vor Initiierung der Polymerisationsreaktion vorgelegt werden und die gegebenenfalls verbliebenen Restmengen an wasserlöslicher makromolekularer Wirtsverbindung und/oder an Monomeren A sowie die Gesamtmengen bzw. die gegebenenfalls verbliebenen Restmengen der Monomeren B bis D dem Polymerisationsgefäß unter Polymerisationsbedingungen zugeführt werden.

Vorteilhaft werden ≥ 60 Gew.-% oder ≥ 70 Gew.-% und insbesondere vorteilhaft ≥ 80 Gew.-% oder ≥ 90 Gew.-% der Gesamtmenge oder sogar die Gesamtmenge an wasserlöslicher makromolekularer Wirtsverbindung und an Monomeren A im Polymerisationsgefäß vor Initiierung der Polymerisationsreaktion vorgelegt. Die Zudosierung der gegebenenfalls verbliebenen Restmengen an wasserlöslicher makromolekularer Wirtsverbindung und an Monomeren A, d.h. ≤ 50 Gew.-%, ≤ 40 Gew.-%, ≤ 30 Gew.-%, ≤ 20 Gew.-% oder ≤ 10 Gew.-% der Gesamtmenge an wasserlöslicher makromolekularer Wirtsverbindung und an Monomeren A nach Initiierung der radikalischen Polymerisationsreaktion, kann dabei diskontinuierlich in einer Portion, diskontinuierlich in mehreren Portionen sowie kontinuierlich mit gleichbleibenden oder sich verändernden Mengenströmen erfolgen. Bevorzugt werden die Gesamtmengen an wasserlöslicher makromolekularer Wirtsverbindung und an Monomeren A im Polymerisationsgefäß vor Initiierung der Polymerisationsreaktion vorgelegt.

Erfindungsgemäß können optional bis zu jeweils 10 Gew.-%, häufig ≤ 5 Gew.-% der Gesamtmengen an Monomeren B bis D im Polymerisationsgefäß vor Initiierung der Polymerisationsreaktion vorgelegt werden. Mit Vorteil werden keine Monomeren B bis D im Polymerisationsgefäß vorgelegt. Die gegebenenfalls verbliebenen Restmengen bzw. die Gesamtmengen an Monomeren B bis D können dem Polymerisationsgefäß nach Initiierung der radikalischen Polymerisationsreaktion, diskontinuierlich in einer Portion, diskontinuierlich in mehreren Portionen sowie kontinuierlich mit gleichbleibenden oder sich verändernden Mengenströmen zugegeben werden. Vorteilhaft erfolgt die Zugabe der Monomeren B bis D kontinuierlich mit gleichbleibenden Mengenströmen. Mit Vorteil erfolgt die Zugabe der Monomeren B bis D in Form eines Monomerengemisches und insbesondere vorteilhaft in Form einer wässrigen Monomerenemulsion.

In einer Ausführungsform hat es sich als vorteilhaft erwiesen, wenn die gegebenenfalls verbliebene Restmenge an makromolekularer Wirtsverbindung und/oder an Monomeren A und die Gesamtmengen bzw. die gegebenenfalls verbliebenen Restmengen der Monomeren B bis D dem Polymerisationsgefäß unter Polymerisationsbedingungen kontinuierlich mit gleichbleibenden Mengenströmen zudosiert werden.

In einer weiteren Ausführungsform hat es sich als vorteilhaft erwiesen, wenn die gegebenenfalls verbliebene Restmenge an makromolekularer Wirtsverbindung und/oder an Monomeren A und die Gesamtmengen bzw. die gegebenenfalls verbliebenen Restmengen der Monomeren B bis D dem Polymerisationsgefäß unter Polymerisationsbedingungen als Monomerengemisch zudosiert werden.

In einer weiteren Ausführungsform hat es sich als besonders vorteilhaft erwiesen, wenn die gegebenenfalls verbliebene Restmenge an makromolekularer Wirtsverbindung und/oder an Monomeren A und die Gesamtmengen bzw. die gegebenenfalls verbliebenen Restmengen der Monomeren B bis D dem Polymerisationsgefäß in Form einer wässrigen Monomerenemulsion zudosiert werden.

Erfindungsgemäß werden im Rahmen des vorliegenden Verfahrens Dispergiermittel mitverwendet, die sowohl die Monomerentröpfchen, wie auch die gebildeten Polymerisatteilchen im wässrigen Medium dispers verteilt halten und so die Stabilität der erzeugten wässrigen Polymerisatdispersion gewährleisten. Als Dispergiermittel kommen sowohl die zur Durchführung von radikalischen wässrigen Emulsionspolymerisationen üblicherweise eingesetzten Schutzkolloide als auch Emulgatoren in Betracht.

Geeignete Schutzkolloide sind beispielsweise Polyvinylalkohole, Polyalkylenglykole, Alkalimetallsalze von Polyacrylsäuren und Polymethacrylsäuren, Gelatinederivate oder Acrylsäure, Methacrylsäure, Maleinsäureanhydrid, 2-Acrylamido-2-methylpropansulfonsäure und/oder 4-Styrolsulfonsäure enthaltende Copolymerisate und deren Alkalimetallsalze aber auch N-Vinylpyrrolidon, N-Vinylcaprolactam, N-Vinylcarbazol, 1-Vinylimidazol, 2-Vinylimidazol, 2-Vinylpyridin, 4-Vinylpyridin, Acrylamid, Methacrylamid, amingruppentragende Acrylate, Methacrylate, Acrylamide und/oder

Methacrylamide enthaltende Homo- und Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart, 1961, Seiten 411 bis 420.

Selbstverständlich können auch Gemische aus Schutzkolloiden und/oder Emulgatoren eingesetzt werden. Häufig werden als Dispergiermittel ausschließlich Emulgatoren eingesetzt, deren relative Molekulargewichte im Unterschied zu den Schutzkolloiden üblicherweise unter 1000 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im allgemeinen sind anionische Emulgatoren untereinander und mit nichtionischen Emulgatoren verträglich. Desgleichen gilt auch für kationische Emulgatoren, während anionische und kationische Emulgatoren meistens nicht miteinander verträglich sind. Eine Übersicht geeigneter Emulgatoren findet sich in Houben-Weyl, Methoden der organischen Chemie, Band XIV/1, Makromolekulare Stoffe, Georg-Thieme-Verlag, Stuttgart, 1961, Seiten 192 bis 208.

Erfindungsgemäß werden als Dispergiermittel jedoch insbesondere Emulgatoren eingesetzt.

Gebräuchliche nichtionische Emulgatoren sind z. B. ethoxylierte Mono-, Di- und Tri-Alkylphenole (EO-Grad: 3 bis 50, Alkylrest: $C_4$ bis $C_{12}$) sowie ethoxylierte Fettalkohole (EO-Grad: 3 bis 80; Alkylrest: $C_8$ bis $C_{36}$). Beispiele hierfür sind die Lutensol® A-Marken ($C_{12}C_{14}$-Fettalkoholethoxylate, EO-Grad: 3 bis 8), Lutensol® AO-Marken ($C_{13}C_{15}$-Oxoalkoholethoxylate, EO-Grad: 3 bis 30), Lutensol® AT-Marken ($C_{16}C_{18}$-Fettalkoholethoxylate, EO-Grad: 11 bis 80), Lutensol® ON-Marken ($C_{10}$-Oxoalkoholethoxylate, EO-Grad: 3 bis 11) und die Lutensol® TO-Marken ($C_{13}$-Oxoalkoholethoxylate, EO-Grad: 3 bis 20) der Fa. BASF AG.

Übliche anionische Emulgatoren sind z. B. Alkalimetall- und Ammoniumsalze von Alkylsulfaten (Alkylrest: $C_8$ bis $C_{12}$), von Schwefelsäurehalbestern ethoxylierter Alkanole (EO-Grad: 4 bis 30, Alkylrest: $C_{12}$ bis $C_{18}$) und ethoxylierter Alkylphenole (EO-Grad: 3 bis 50, Alkylrest: $C_4$ bis $C_{12}$), von Alkylsulfonsäuren (Alkylrest: $C_{12}$ bis $C_{18}$) und von Alkylarylsulfonsäuren (Alkylrest: $C_9$ bis $C_{18}$).

Als weitere anionische Emulgatoren haben sich ferner Verbindungen der allgemeinen Formel (I)

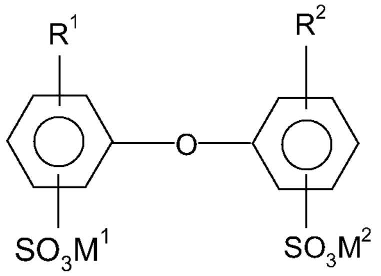

(I)

worin $R^1$ und $R^2$ H-Atome oder $C_4$- bis $C_{24}$-Alkyl bedeuten und nicht gleichzeitig H-Atome sind, und $M^1$ und $M^2$ Alkalimetallionen und/oder Ammoniumionen sein können, als geeignet erwiesen. In der allgemeinen Formel (I) bedeuten $R^1$ und $R^2$ bevorzugt lineare oder verzweigte Alkylreste mit 6 bis 18 C-Atomen, insbesondere mit 6, 12 und 16 C-Atomen oder Wasserstoff, wobei $R^1$ und $R^2$ nicht beide gleichzeitig H-Atome sind. $M^1$ und $M^2$ sind bevorzugt Natrium, Kalium oder Ammonium, wobei Natrium besonders bevorzugt ist. Besonders vorteilhaft sind Verbindungen (I), in denen $M^1$ und $M^2$ Natrium, $R^1$ ein verzweigter Alkylrest mit 12 C-Atomen und $R^2$ ein H-Atom oder $R^1$ ist. Häufig werden technische Gemische verwendet, die einen Anteil von 50 bis 90 Gew.-% des monoalkylierten Produktes aufweisen, wie beispielsweise Dowfax® 2A1 (Marke der Dow Chemical Company). Die Verbindungen (I) sind allgemein bekannt, z. B. aus US-A 4269749, und im Handel erhältlich.

Geeignete kationenaktive Emulgatoren sind in der Regel einen $C_6$- bis $C_{18}$-Alkyl-, -Alkylaryl- oder heterocyclischen Rest aufweisende primäre, sekundäre, tertiäre oder quartäre Ammoniumsalze, Alkanolammoniumsalze, Pyridiniumsalze, Imidazoliniumsalze, Oxazoliniumsalze, Morpholiniumsalze, Thiazoliniumsalze sowie Salze von Aminoxiden, Chinoliniumsalze, Isochinoliniumsalze, Tropyliumsalze, Sulfoniumsalze und Phosphoniumsalze. Beispielhaft genannt seien Dodecylammoniumacetat oder das entsprechende Sulfat, die Sulfate oder Acetate der verschiedenen 2-(N,N,N-Trimethylammonium)ethylparaffinsäureester, N-Cetylpyridiniumsulfat, N-Laurylpyridiniumsulfat sowie N-Cetyl-N,N,N-trimethylammoniumsulfat, N-Dodecyl-N,N,N-trimethylammoniumsulfat, N-Octyl-N,N,N-trimethlyammoniumsulfat, N,N-Distearyl-N,N-dimethylammoniumsulfat sowie das Gemini-Tensid N,N'-(Lauryldimethyl)ethylendiamindisulfat, ethoxyliertes Talgfettalkyl-N-methylammoniumsulfat und ethoxyliertes Oleylamin (beispielsweise Uniperol® AC der Fa. BASF AG, ca. 12 Ethylenoxideinheiten). Zahlreiche weitere Beispiele finden sich in H. Stache, Tensid-Taschenbuch, Carl-Hanser-Verlag, München, Wien, 1981 und in McCutcheon's, Emulsifiers & Detergents, MC Publishing Company, Glen Rock, 1989. Günstig ist, wenn die anionischen Gegengruppen möglichst gering nucleophil sind, wie beispielsweise

Perchlorat, Sulfat, Phosphat, Nitrat und Carboxylate, wie beispielsweise Acetat, Trifluoracetat, Trichloracetat, Propionat, Oxalat, Citrat, Benzoat, sowie konjugierte Anionen von Organosulfonsäuren, wie zum Beispiel Methylsulfonat, Trifluormethylsulfonat und para-Toluolsulfonat, weiterhin Tetrafluoroborat, Tetraphenylborat, Tetrakis(pentafluorophenyl) borat, Tetrakis[bis(3,5-trifluormethyl)phenyl]borat, Hexafluorophosphat, Hexafluoroarsenat oder Hexafluoroantimonat.

Die als Dispergiermittel bevorzugt eingesetzten Emulgatoren werden vorteilhaft in einer Gesamtmenge ≥ 0,005 und ≤ 10 Gew.-%, vorzugsweise ≥ 0,01 und ≤ 5 Gew.-%, insbesondere ≥ 0,1 und ≤ 3 Gew.-%, jeweils bezogen auf die Monomerengesamtmenge, eingesetzt.

Die Gesamtmenge der als Dispergiermittel zusätzlich oder statt der Emulgatoren eingesetzten Schutzkolloide beträgt oft ≥ 0,1 und ≤ 10 Gew.-% und häufig ≥ 0,2 und ≤ 7 Gew.-%, jeweils bezogen die Monomerengesamtmenge.

Bevorzugt werden jedoch anionische und/oder nichtionische Emulgatoren und insbesondere bevorzugt anionische Emulgatoren als Dispergiermittel eingesetzt.

Die Auslösung der radikalisch initiierten wässrigen Emulsionspolymerisation erfolgt mittels eines radikalischen Polymerisationsinitiators (Radikalinitiator). Es kann sich dabei prinzipiell sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Mono- oder Di-Alkalimetall- oder Ammoniumsalze der Peroxodischwefelsäure, wie beispielsweise deren Mono- und Di-Natrium-, -Kalium- oder Ammoniumsalze oder organische Peroxide, wie Alkylhydroperoxide, beispielsweise tert.-Butyl-, p-Mentyl- oder Cumylhydroperoxid, sowie Dialkyl- oder Diarylperoxide, wie Di-tert.-Butyl- oder Di-Cumylperoxid eingesetzt werden. Als Azoverbindung finden im wesentlichen 2,2'-Azobis(isobutyronitril), 2,2'-Azobis(2,4-dimethylvaleronitril) und 2,2'-Azobis(amidinopropyl)dihydrochlorid (AIBA, entspricht V-50 von Wako Chemicals) Verwendung. Als Oxidationsmittel für Redoxinitiatorsysteme kommen im wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/oder Natriummetabisulfit, Formaldehydsulfoxylate, beispielsweise Kalium- und/oder Natriumformaldehydsulfoxylat, Alkalisalze, speziell Kalium- und/oder Natriumsalze aliphatische Sulfinsäuren und Alkalimetallhydrogensulfide, wie beispielsweise Kalium- und/oder Natriumhydrogensulfid, Salze mehrwertiger Metalle, wie Eisen-(II)-sulfat, Eisen-(II)-Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden. In der Regel beträgt die Menge des eingesetzten Radikalinitiators, bezogen auf die Monomerengesamtmenge, 0,01 bis 5 Gew.-%, bevorzugt 0,1 bis 3 Gew.-% und insbesondere bevorzugt 0,2 bis 1,5 Gew.-%.

Erfindungsgemäß kann die Gesamtmenge des Radikalinitiators im wässrigen Reaktionsmedium vor Initiierung der Polymerisationsreaktion vorgelegt werden. Es ist aber auch möglich, gegebenenfalls lediglich eine Teilmenge des Radikalinitiators im wässrigen Reaktionsmedium vor Initiierung der Polymerisationsreaktion vorzulegen und dann unter Polymerisationsbedingungen während der erfindungsgemäßen radikalischen Emulsionspolymerisation die Gesamtmenge bzw. die gegebenenfalls verbliebene Restmenge nach Maßgabe des Verbrauchs kontinuierlich oder diskontinuierlich zuzugeben.

Unter Initiierung der Polymerisationsreaktion wird der Start der Polymerisationsreaktion der im Polymerisationsgefäß vorliegenden Monomeren nach Radikalbildung des Radikalinitiators verstanden. Dabei kann die Initiierung der Polymerisationsreaktion durch Zugabe von Radikalinitiator zum wässrigen Polymerisationsgemisch im Polymerisationsgefäß unter Polymerisationsbedingungen erfolgen. Es ist aber auch möglich, dass eine Teil- oder die Gesamtmenge des Radikalinitiators dem die vorgelegten Monomeren enthaltenden wässrigen Polymerisationsgemisch im Polymerisationsgefäß unter Bedingungen, welche nicht geeignet sind eine Polymerisationsreaktion auszulösen, beispielsweise bei tiefer Temperatur, zugegeben werden und danach im wässrigen Polymerisationsgemisch Polymerisationsbedingungen eingestellt werden. Unter Polymerisationsbedingungen sind dabei generell diejenigen Temperaturen und Drücke zu verstehen, unter denen die radikalisch initiierte wässrige Emulsionspolymerisation mit ausreichender Polymerisationsgeschwindigkeit verläuft. Sie sind insbesondere abhängig vom verwendeten Radikalinitiator. Vorteilhaft werden Art und Menge des Radikalinitiators, Polymerisationstemperatur und Polymerisationsdruck so ausgewählt, dass der Radikalinitiator eine Halbwertszeit ≤ 3 Stunden, insbesondere vorteilhaft ≤ 1 Stunde und ganz besonders vorteilhaft ≤ 30 Minuten aufweist und dabei immer genügend Startradikale zur Verfügung stehen, um die Polymerisationsreaktion zu initiieren bzw. aufrechtzuerhalten.

Als Reaktionstemperatur für die erfindungsgemäße radikalische wässrige Emulsionspolymerisation kommt der gesamte Bereich von 0 bis 170 °C in Betracht. Dabei werden in der Regel Temperaturen von 50 bis 120 °C, häufig 60 bis 110 °C und oft 70 bis 100 °C angewendet. Die erfindungsgemäße radikalische wässrige Emulsionspolymerisation kann bei einem Druck kleiner, gleich oder größer 1 atm (Atmosphärendruck) durchgeführt werden, so dass die Polymerisationstemperatur 100 °C übersteigen und bis zu 170 °C betragen kann. Vorzugsweise werden leichtflüchtige Monomere, wie beispielsweise n-Buten-1, n-Buten-2, 2-Methylpropen, 2-Methylbuten-1, 3-Methylbuten-1, 2-Methylbuten-2, Butadien oder Vinylchlorid unter erhöhtem Druck polymerisiert. Dabei kann der Druck 1,2, 1,5, 2, 5, 10, 15 bar oder noch höhere Werte einnehmen. Werden Emulsionspolymerisationen im Unterdruck durchgeführt, werden Drücke von

950 mbar, häufig von 900 mbar und oft 850 mbar (absolut) eingestellt. Vorteilhaft wird die erfindungsgemäße radikalische wässrige Emuslionspolymerisation bei 1 atm unter Sauerstoffausschluß, beispielsweise unter Inertgasatmosphäre, wie beispielsweise unter Stickstoff oder Argon durchgeführt.

Das wässrige Reaktionsmedium kann prinzipiell auch in untergeordneten Mengen (≤ 5 Gew.-%) wasserlösliche organische Lösungsmittel, wie beispielsweise Methanol, Ethanol, Isopropanol, Butanole, Pentanole, aber auch Aceton etc. umfassen. Bevorzugt wird das erfindungsgemäße Verfahren jedoch in Abwesenheit solcher Lösungsmittel durchgeführt.

Neben den vorgenannten Komponenten können im erfindungsgemäßen Verfahren optional auch radikalkettenübertragende Verbindungen eingesetzt werden, um das Molekulargewicht der durch die Polymerisation zugänglichen Polymerisate zu reduzieren bzw. zu kontrollieren. Dabei kommen im wesentlichen aliphatische und/oder araliphatische Halogenverbindungen, wie beispielsweise n-Butylchlorid, n-Butylbromid, n-Butyljodid, Methylenchlorid, Ethylendichlorid, Chloroform, Bromoform, Bromtrichlormethan, Dibromdichlormethan, Tetrachlorkohlenstoff, Tetrabromkohlenstoff, Benzylchlorid, Benzylbromid, organische Thioverbindungen, wie primäre, sekundäre oder tertiäre aliphatische Thiole, wie beispielsweise Ethanthiol, n-Propanthiol, 2-Propanthiol, n-Butanthiol, 2-Butanthiol, 2-Methyl-2-propanthiol, n-Pentanthiol, 2-Pentanthiol, 3-Pentanthiol, 2-Methyl-2-butanthiol, 3-Methyl-2-butanthiol, n-Hexanthiol, 2-Hexanthiol, 3-Hexanthiol, 2-Methyl-2-pentanthiol, 3-Methyl-2-pentanthiol, 4-Methyl-2-pentanthiol, 2-Methyl-3-pentanthiol, 3-Methyl-3-pentanthiol, 2-Ethylbutanthiol, 2-Ethyl-2-butanthiol, n-Heptanthiol und seine isomeren Verbindungen, n-Octanthiol und seine isomeren Verbindungen, n-Nonanthiol und seine isomeren Verbindungen, n-Decanthiol und seine isomeren Verbindungen, n-Undecanthiol und seine isomeren Verbindungen, n-Dodecanthiol und seine isomeren Verbindungen, n-Tridecanthiol und seine isomeren Verbindungen, substituierte Thiole, wie beispielsweise 2-Hydroxyethanthiol, aromatische Thiole, wie Benzolthiol, ortho-, meta-, oder para-Methylbenzolthiol, sowie alle weiteren im Polymerhandbook 3rd edtition, 1989, J. Brandrup und E.H. Immergut, John Weley & Sons, Abschnitt II, Seiten 133 bis 141, beschriebenen Schwefelverbindungen, aber auch aliphatische und/oder aromatische Aldehyde, wie Acetaldeyhd, Propionaldehyd und/oder Benzaldehyd, ungesättigte Fettsäuren, wie Ölsäure, Diene mit nicht konjugierten Doppelbindungen, wie Divinylmethan oder Vinylcyclohexan oder Kohlenwasserstoffe mit leicht abstrahierbaren Wasserstoffatomen, wie beispielsweise Toluol, zum Einsatz. Es ist aber auch möglich, Gemische sich nicht störender vorgenannter radikalkettenübertragender Verbindungen einzusetzen. Die im erfindungsgemäßen Verfahren optional eingesetzte Gesamtmenge der radikalkettenübertragenden Verbindungen, bezogen auf die Monomerengesamtmenge, ist in der Regel ≤ 5 Gew.-%, oft ≤ 3 Gew.-% und häufig ≤ 1 Gew.-%.

Günstig ist es, wenn eine Teil- oder die Gesamtmenge der optional eingesetzten radikalkettenübertragenden Verbindung dem Reaktionsmedium vor der Initiierung der radikalischen Polymerisation zugeführt wird. Darüber hinaus kann eine Teil- oder die Gesamtmenge die radikalkettenübertragende Verbindung dem wässrigen Reaktionsmedium vorteilhaft auch gemeinsam mit den Monomeren B bis D während der Polymerisation zugeführt werden.

Die nach dem erfindungsgemäßen Verfahren zugänglichen Polymerisate können prinzipiell Glasübergangstemperaturen im Bereich von -70 bis +150 °C, oft -30 bis +100 °C und häufig -20 bis +50°C aufweisen. Sollen die wässrigen Polymerisatdispersion zur Herstellung von Klebstoffen, insbesondere Haftklebstoffen eingesetzt werden, so werden die Monomeren A bis D so gewählt, dass das erhaltene Polymerisat eine Glasübergangstemperatur $T_g$ ≤ +20 °C aufweist. Häufig werden die Monomeren A bis D so gewählt, dass Polymerisate mit einem Tg-Wert ≤ +10 °C, ≤ 0 °C, ≤ -10 °C, ≤ -20 °C, ≤ -30 °C, ≤ -40 °C oder ≤ -50 °C gebildet werden. Es können aber auch Polymerisate hergestellt werden, deren Glasübergangstemperaturen zwischen -70 und +10 °C, zwischen -60 und -10 °C oder zwischen -50 und -20 °C liegen. Unter Glasübergangstemperatur wird hier die midpoint temperature nach ASTM D 3418-82 verstanden, ermittelt durch Differentialthermoanalyse (DSC) [vgl. auch Ullmann's Encyclopedia of Industrial Chemistry, Seite 169, Verlag Chemie, Weinheim, 1992 und Zosel in Farbe und Lack, 82, Seiten 125 bis 134, 1976].

Nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für die Glasübergangstemperatur von höchstens schwach vernetzten Mischpolymerisaten in guter Näherung:

$$1/T_g = x^1/T_g^1 + x^2/T_g^2 + .... x^n/T_g^n,$$

wobei $x^1$, $x^2$, .... $x^n$ die Massenbrüche der Monomeren 1, 2, .... n und $T_g^1$, $Tg^2$, .... $T_g^n$ die Glasübergangstemperaturen der jeweils nur aus einem der Monomeren 1, 2, .... n aufgebauten Polymerisaten in Grad Kelvin bedeuten. Die Glasübergangstemperaturen dieser Homopolymerisate der meisten ethylenisch ungesättigten Monomere sind bekannt (bzw. können in einfacher an sich bekannter Weise experimentell ermittelt werden) und beispielsweise in J. Brandrup, E.H. Immergut, Polymer Handbook 1st Ed. J. Wiley, New York, 1966, 2nd Ed. J. Wiley, New York, 1975 und 3rd Ed. J. Wiley, New York, 1989, sowie in Ullmann's Cncyclopedia of Industrial Chemistry, Seite 169, Verlag Chemie, Weinheim, 1992, aufgeführt.

Optional kann die radikalisch initiierte wässrige Emulsionspolymerisation auch in Anwesenheit einer Polymersaat, beispielsweise in Anwesenheit von 0,01 bis 3 Gew.-%, häufig von 0,02 bis 2 Gew.-% und oft von 0,04 bis 1,5 Gew.-% einer Polymersaat, jeweils bezogen auf die Monomerengesamtmenge, erfolgen.

Eine Polymersaat wird insbesondere dann eingesetzt, wenn die Teilchengröße der mittels einer radikalisch wässrigen Emulsionspolymerisation herzustellenden Polymerpartikel gezielt eingestellt werden soll (siehe hierzu beispielsweise US-A 2520959 und US-A 3397165).

Insbesondere wird eine Polymersaat eingesetzt, deren Polymersaatpartikel eine enge Teilchengrößenverteilung und gewichtsmittlere Durchmesser $D_w \leq 100$ nm, häufig $\geq 5$ nm bis $\leq 50$ nm und oft $\geq 15$ nm bis $\leq 35$ nm aufweisen. Die Bestimmung der gewichtsmittleren Teilchendurchmesser ist dem Fachmann bekannt und erfolgt beispielsweise über die Methode der Analytischen Ultrazentrifuge. Unter gewichtsmittlerem Teilchendurchmesser wird in dieser Schrift der nach der Methode der Analytischen Ultrazentrifuge ermittelte gewichtsmittlere $D_{w50}$-Wert verstanden (vgl. hierzu S.E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Resolution Particle Size Distribution and Density Gradient Techniques, W. Mächtle, Seiten 147 bis 175).

Unter enger Teilchengrößenverteilung soll im Rahmen dieser Schrift verstanden werden, wenn das Verhältnis der nach der Methode der Analytischen Ultrazentrifuge ermittelten gewichtsmittleren Teilchendurchmesser $D_{w50}$ und zahlenmittleren Teilchendurchmesser $D_{N50}$ $[D_{w50}/D_{N50}] \leq 2{,}0$, bevorzugt $\leq 1{,}5$ und insbesondere bevorzugt $\leq 1{,}2$ oder $\leq 1{,}1$ ist.

Üblicherweise wird die Polymersaat in Form einer wässrigen Polymerisatdispersion eingesetzt. Die vorgenannten Mengenangaben beziehen sich dabei auf den Polymerisatfeststoffanteil der wässrigen Polymersaatdispersion; sie sind daher als Gew.-Teile Polymersaatfeststoff, bezogen auf die Monomerengesamtmenge, angegeben.

Wird eine Polymersaat verwendet, so wird vorteilhaft eine Fremdpolymersaat eingesetzt. Im Unterschied zu einer sogenannten in situ-Polymersaat, welche vor Beginn der eigentlichen Emulsionspolymerisation im Reaktionsgefäß hergestellt wird und welche die gleiche monomere Zusammensetzung aufweist wie das durch die nachfolgende radikalisch initiierte wässrige Emulsionspolymerisation hergestellte Polymerisat, wird unter einer Fremdpolymersaat eine Polymersaat verstanden, die in einem separaten Reaktionsschritt hergestellt wurde und deren monomere Zusammensetzung von dem durch die radikalisch initiierte wässrige Emulsionspolymerisation hergestellten Polymerisat verschieden ist, was jedoch nichts anderes bedeutet, als dass zur Herstellung der Fremdpolymersaat und zur Herstellung der wässrigen Polymerisatdispersion unterschiedliche Monomere bzw. Monomerenmischungen mit unterschiedlicher Zusammensetzung eingesetzt werden. Die Herstellung einer Fremdpolymersaat ist dem Fachmann geläufig und erfolgt üblicherweise dergestalt, dass eine relativ kleine Menge an Monomeren sowie eine relativ große Menge an Emulgatoren in einem Reaktionsgefäß vorgelegt und bei Reaktionstemperatur eine ausreichende Menge an Polymerisationsinitiator zugegeben wird.

Erfindungsgemäß bevorzugt wird eine Polymerfremdsaat mit einer Glasübergangstemperatur $\geq 50$ °C, häufig $\geq 60$ °C oder $\geq 70$ °C und oft $\geq 80$ °C oder $\geq 90$ °C eingesetzt. Insbesondere bevorzugt ist eine Polystyrol- oder eine Polymethylmethacrylat-Polymersaat.

Die Gesamtmenge an Fremdpolymersaat kann im Polymerisationsgefäß vorgelegt werden. Es ist aber auch möglich, lediglich eine Teilmenge der Fremdpolymersaat im Polymerisationsgefäß vorzulegen und die verbleibende Restmenge während der Polymerisation gemeinsam mit den Monomeren A bis D zuzugeben. Falls erforderlich, kann aber auch die Gesamtpolymersaatmenge im Verlauf der Polymerisation zuzugeben werden. Vorzugsweise wird die Gesamtmenge an Fremdpolymersaat vor Initiierung der Polymerisationsreaktion im Polymerisationsgefäß vorgelegt.

Die erfindungsgemäß zugänglichen wässrigen Polymerisatdispersionen weisen üblicherweise einen Polymerisatfeststoffgehalt von $\geq 10$ und $\leq 70$ Gew.-%, häufig $\geq 20$ und $\leq 65$ Gew.-% und oft $\geq 25$ und $\leq 60$ Gew.-%, jeweils bezogen auf die wässrige Polymerisatdispersion, auf. Der über quasielastische Lichtstreuung (ISO-Norm 13 321) ermittelte zahlenmittlere Teilchendurchmesser (cumulant z-average) liegt in der Regel zwischen 10 und 2000 nm, häufig zwischen 20 und 1000 nm und oft zwischen 100 und 700 nm bzw. 100 bis 400 nm.

Häufig werden bei den erhaltenen wässrigen Polymerisatdispersionen die Restgehalte an nicht umgesetzten Monomeren sowie anderen leichtsiedenden Verbindungen durch dem Fachmann ebenfalls bekannte chemische und/oder physikalische Methoden [siehe beispielsweise EP-A 771328, DE-A 19624299, DE-A 19621027, DE-A 19741184, DE-A 19741187, DE-A 19805122, DE-A 19828183, DE-A 19839199, DE-A 19840586 und 19847115] herabgesetzt. Die nach dem erfindungsgemäßen Verfahren zugänglichen wässrigen Polymerisatdispersionen weisen einen deutlich höheren Monomerenumsatz bei gleicher Polymerisationszeit, bzw. einen höheren Polymerisatfeststoffgehalt nach abgeschlossener Polymerisationsreaktion auf.

Die nach dem erfindungsgemäßen Verfahren zugänglichen wässrigen Polymerisatdispersionen können insbesondere zur Herstellung von Klebstoffen, Dichtmassen, Kunststoffputzen, Papierstreichmassen, Faservliesen, Anstrichmitteln und Beschichtungsmitteln für organische Substrate, wie beispielsweise Leder oder textile Stoffe, sowie zur Modifizierung von mineralischen Bindemitteln eingesetzt werden.

Bei der Verwendung als Klebstoff, insbesondere als Haftklebstoff, wird den nach dem erfindungsgemäßen

Verfahren zugänglichen wässrigen Polymerisatdispersionen vorzugsweise ein Tackifier, d. h. ein klebrigmachendes Harz zugesetzt. Tackifier sind beispielsweise aus Adäsive Age, Juli 1987, Seiten 19 bis 23 oder Polym. Mater. Sci. Eng. 61 (1989), Seiten 588 bis 592, bekannt.

Tackifier sind z. B. Naturharze, wie Kolophoniumharze und deren durch Disproportionierung oder Isomerisierung, Polymerisation, Dimerisation oder Hydrierung entstehenden Derivate. Diese können in ihrer Salzform (mit z. B. ein- oder mehrwertigen Gegenionen [Kationen]) oder bevorzugt in ihrer veresterten Form vorliegen. Alkohole, die zur Veresterung verwendet werden, können ein- oder mehrwertig sein. Beispiele sind Methanol, Ethandiol, Diethylenglykol, Triethylenglykol, 1,2,3-Propantriol (Glyzerin) oder Pentaerythrit.

Desweiteren finden auch Kohlenwasserstoffharze, z. B. Cumaron-Inden-Harze, Polyterpen-Harze, Kohlenwasserstoffharze auf Basis ungesättigter CH-Verbindungen, wie Butadien, Penten, Methylbuten, Isopren, Piperylen, Divinylmethan, Pentadien, Cyclopenten, Cyclopentadien, Cyclohexadien, Styrol, α-Methylstyrol oder Vinyltoluole Verwendung.

Als Tackifier werden zunehmend auch Polyacrylate, welche ein niedriges Molekulargewicht aufweisen, verwendet. Vorzugsweise haben diese Polyacrylate ein gewichtsmittleres Molekulargewicht unter 30.000 g/mol. Die Polyacrylate bestehen bevorzugt zu mindestens 60, insbesondere mindestens 80 Gew.-% aus $C_1$-$C_8$-Alkylacrylaten oder -methacrylaten.

Bevorzugte Tackifier sind natürliche oder chemisch modifizierte Kolophoniumharze. Kolophoniumharze bestehen zum überwiegenden Teil aus Abietinsäure oder Abietinsäurederivaten. Die Tackifier können in einfacher Weise den erfindungsgemäß zugänglichen wässrigen Polymerisatdispersionen zugesetzt werden. Vorzugsweise liegen die Tackifier dabei selbst in Form einer wässrigen Dispersion vor.

Die Menge der Tackifier beträgt vorzugsweise 5 bis 100 Gew.-%, besonders 10 bis 50 Gew.-%, jeweils bezogen auf die Gesamtmenge des Polymerisats (fest/fest). Neben Tackifiern können selbstverständlich auch noch andere übliche Additive, beispielsweise Verdickungsmittel, Entschäumer, Weichmacher, Pigmente, Netzmittel oder Füllstoffe bei der Formulierung von Haftklebstoffen Verwendung finden.

Die wässrigen Polymerisatdispersionen können durch übliche Methoden, beispielsweise durch Rollen, Rakeln, Streichen etc. auf Substrate, wie beispielsweise Papier oder Polymerbänder und -folien, bevorzugt bestehend aus Polyethylen, Polypropylen, das biaxial oder monoaxial verstreckt sein kann, Polyethylenterephthalat, Polyvinylchlorid, Polystyrol, Polyamid oder Metalloberflächen aufgebracht werden. Das Wasser kann in einfacher Weise durch Trocknung bei 50 bis 150 °C entfernt werden. Zur späteren Verwendung kann die mit Haftklebstoff beschichtete Seite der Substrate, beispielsweise der Etiketten oder Bänder, mit einem Releasepapier, beispielsweise mit einem silikonisierten Papier, abgedeckt werden.

Die nach dem erfindungsgemäßen Verfahren zugänglichen wässrigen Polymerisatdispersionen eignen sich vorteilhaft als Komponente in Klebstoffen, insbesondere Haftklebstoffen. Dabei weisen diese erfindungsgemäßen Klebstoffe vorteilhaft eine verbesserte Adhäsion auf Kunststoffoberflächen, insbesondere Polyethylenoberflächen auf.

Folgendes nicht einschränkendes Beispiel soll die Erfindung erläutern.

Beispiel

In einem 3,5 l-Vierhalskolben, ausgerüstet mit einem Anker-Rührer, Rückflußkühler und zwei Dosiereinrichtungen wurden bei 20 bis 25 °C (Raumtemperatur) und unter Stickstoffatmosphäre 590 g entionisiertes Wasser, 21,2 g einer wässrigen Polystyrolsaat (Feststoffgehalt 33 Gew.-%, zahlenmittlerer Teilchendurchmesser 32 nm), 123,5 g Octadecen-1, 21 g β-Cyclodextrin (Cavasol® W7M), 1,8 g einer 40 gew.-%igen wässrigen Lösung von Emulgator K30® der Fa. Lanxess, Leverkusen (Mischung aus primären und sekundären Natriumalkylsulfonaten mit einer durchschnittlichen Kettenlänge von 15 Kohlenstoffatomen), 10,5 g einer 20 gew.-%igen wässrigen Lösung von Lutensol® TO 20 der BASF Aktiengesellschaft (C13-Oxoalkohol ethoxiliert, durchschnittlicher Ethoxilierungsgrad: 20) und 10,5 g einer 7 gew.-%igen wässrigen Lösung von Natriumpersulfat vorgelegt und unter Rühren auf 90 °C aufgeheizt. Nachdem die Temperatur erreicht war, wurde der Monomerzulauf, bestehend aus 370 g entionisiertem Wasser, 1,8 g einer 40 gew.-%igen wässrigen Lösung von Emulgator K30®, 10,5 g einer 20 gew.-%igen wässrigen Lösung von Lutensol® TO 20, 4,5 g einer 25 gew.-%igen wässrigen Lösung von Natriumhydroxid, 581 g n-Butylacrylat und 14,0 g Acrylsäure und der Initiatorzulauf, bestehend aus 59,5 g einer 7 gew.-%igen wässrigen Lösung von Natriumpersulfat, gleichzeitig gestartet, wobei der Monomerzulauf innnerhalb von 3 Stunden und der Initiatorzulauf innerhalb von 3,5 Stunden kontinuierlich zudosiert wurde. Anschließend liess man die erhaltene wässrige Polymerisatdispersion noch 2 Stunde bei 90 °C nachreagieren. Danach wurde die wässrige Polymerisatdispersion auf Raumtemperatur abgekühlt und mit 35,0 g einer 10 gew.-%igen wässrigen Lösung von Natriumhydroxid versetzt. Nach Filtration der wässrigen Polymerisatdispersion über ein 400 μm-Sieb wurde kein Koagulat erhalten. Die erhaltene wässrige Polymerisatdispersion wies einen Feststoffgehalt von 39,6 Gew.-%, bezogen auf das Gesamtgewicht der wässrigen Polymerisatdispersion, auf. Die Glasübergangstemperatur des Polymerisats betrug -46 °C. Die mittlere Teilchengröße betrug 164 nm.

Die Feststoffgehalt wurde bestimmt, indem eine definierte Menge der wässrigen Polymerisatdispersion (ca. 5

g) bei 140 °C in einem Trockenschrank bis zur Gewichtskonstanz getrocknet wurde. Es wurden zwei separate Messungen durchgeführt. Der im Beispiel angegebene Wert stellt den Mittelwert der beiden Messergebnisse dar.

Die Bestimmung der Glasübergangstemperatur erfolgte gemäß DIN 53765 mittels eines DSC 820-Geräts, Serie TA 8000 der Fa. Mettler-Toledo.

Die mittleren Teilchendurchmesser der Copolymerisatteilchen wurden generell durch dynamische Lichtstreuung an einer 0,005 bis 0,01 gewichtsprozentigen wässrigen Copolymerisatdispersion bei 23 °C mittels eines Autosizer IIC der Fa. Malvern Instruments, England, ermittelt. Angegeben wird der mittlere Durchmesser der Kumulantenauswertung (cumulant z-average) der gemessenen Autokorrelationsfunktion (ISO-Norm 13321).

Die Bestimmung des Koagulatgehaltes erfolgte dergestalt, dass die gesamte Menge der jeweils erhaltenen wässrigen Polymerisatdispersion über ein 400 µm-Sieb filtriert wurde. Anschließend wurde der verbleibende Koagulatrückstand auf dem Sieb mit ca. 200 ml entionisiertem Wasser gewaschen und im Vakuumschrank bei einem Druck von ca. 30 mbar (absolut) bei Raumtemperatur bis zur Gewichtskonstanz getrocknet.

Vergleichsbeispiel 1

Die Durchführung des Vergleichsbeispiels 1 erfolgte analog dem Beispiel, jedoch mit dem Unterschied, dass keine makromolekulare Wirtsverbindung eingesetzt wurde. Es wurde keine wässrige Polymerisatdispersion, sondern lediglich ein flüssiges 2-Phasengemisch aus einer wässrigen und einer organischen (Octadecen-)Phase erhalten.

Vergleichsbeispiel 2

Die Durchführung des Vergleichsbeispiels 2 erfolgte analog dem Beispiel, jedoch mit dem Unterschied, dass die makromolekulare Wirtsverbindung nicht vorgelegt, sondern als homogener Bestandteil der Monomerenemulsion zudosiert wurde. Nach Filtration über ein 400 µm-Sieb wurde eine wässrige Polymerisatdispersion mit einem Feststoffgehalt von 37,1 Gew.-% erhalten. Die Koagulatmenge betrug ca. 100 g.

Vergleichsbeispiel 3

Die Durchführung des Vergleichsbeispiels 3 erfolgte analog dem Beispiel, jedoch mit dem Unterschied, dass das Octadecen-1 nicht vorgelegt, sondern als homogener Bestandteil der Monomerenemulsion zudosiert wurde. Nach Filtration über ein 400 µm-Sieb wurde eine wässrige Polymerisatdispersion mit einem Feststoffgehalt von 39,0 Gew.-% erhalten. Die Koagulatmenge betrug ca. 8 g.

Vergleichsbeispiel 4

Die Durchführung des Vergleichsbeispiels 4 erfolgte analog dem Beispiel, jedoch mit dem Unterschied, dass weder das Octadecen-1 noch die makromolekulare Wirtsverbindung vorgelegt, sondern als homogene Bestandteile der Monomerenemulsion zudosiert wurden. Es wurde keine stabile Polymerisatdispersion erhalten, da der Ansatz nach Zulauf der Monomerenemulsion koagulierte.

## Patentansprüche

**1.** Verfahren zur Herstellung einer wässrigen Polymerisatdispersion durch radikalisch initiierte wässrige Emulsionspolymerisation von ethylenisch ungesättigten Monomeren in Anwesenheit wenigstens eines Dispergiermittels, wenigstens eines Radikalinitiators und wenigstens einer wasserlöslichen makromolekularen Wirtsverbindung, wobei zur Emulsionspolymerisation

| | |
|---|---|
| 1 bis 50 Gew.-% | eines 4 bis 40 C-Atome aufweisenden Alkens [Monomer A], und |
| 50 bis 99 Gew.-% | eines Esters auf Basis einer 3 bis 6 C-Atome aufweisenden α,β-monoethylenisch ungesättigten Mono- oder Dicarbonsäure und eines 1 bis 12 C-Atome aufweisenden Alkanols [Monomer B], sowie gegebenenfalls |
| 0 bis 10 Gew.-% | einer 3 bis 6 C-Atome aufweisenden α,β-monoethylenisch ungesättigten Mono- oder Dicarbonsäure und/oder deren Amid [Monomer C] und |
| 0 bis 25 Gew.-% | einer sich von den Monomeren A bis C unterscheidenden α,β-ethylenisch ungesättigten Verbindung [Monomer D], |

eingesetzt werden und sich die Monomeren A bis D zu 100 Gew.-% [Gesamtmonomerenmenge] addieren, und wobei 0,1 bis 20 Gew.-% einer wasserlöslichen makromolekularen Wirtsverbindung, welche einen hydrophoben Hohlraum

und eine hydrophile Hülle aufweist, bezogen auf die Gesamtmonomerenmenge, eingesetzt werden, **dadurch gekennzeichnet, dass** wenigstens 50 Gew.-% der Gesamtmenge an makromolekularer Wirtsverbindung, wenigstens 50 Gew.-% der Gesamtmenge an Monomer A und optional bis zu jeweils 10 Gew.-% der Gesamtmengen an Monomeren B bis D im Polymerisationsgefäß vor Initiierung der Polymerisationsreaktion vorgelegt werden und die gegebenenfalls verbliebenen Restmengen an makromolekularer Wirtsverbindung und/oder an Monomer A sowie die Gesamtmengen bzw. die gegebenenfalls verbliebenen Restmengen der Monomeren B bis D dem Polymerisationsgefäß unter Polymerisationsbedingungen zugeführt werden.

**2.** Verfahren nach Anspruch 1, **dadurch gekennzeichnet, dass**

| | |
|---|---|
| 1 bis 49,99 Gew.-% | Monomer A, und |
| 50 bis 98,99 Gew.-% | Monomer B, sowie |
| 0,01 bis 10 Gew.-% | Monomer C |

eingesetzt werden.

**3.** Verfahren nach einem der Ansprüche 1 und 2, **dadurch gekennzeichnet, dass** als Monomer A ein 1-Alken eingesetzt wird.

**4.** Verfahren nach einem der Ansprüche 1 bis 3, **dadurch gekennzeichnet, dass** als Monomer B ein Ester auf Basis einer 3 oder 4 C-Atome aufweisenden α,β-monoethylenisch ungesättigten Mono- oder Dicarbonsäure und eines 1 bis 8 C-Atome aufweisenden Alkanols eingesetzt wird.

**5.** Verfahren nach einem der Ansprüche 1 bis 4, **dadurch gekennzeichnet, dass** als Monomer A ein 12 bis 24 C-Atome aufweisendes Alken eingesetzt wird.

**6.** Verfahren nach einem der Ansprüche 1 bis 5, **dadurch gekennzeichnet, dass** jeweils wenigstens 80 Gew.-% der Gesamtmenge an makromolekularer Wirtsverbindung und an Monomeren A vor Initiierung der Polymerisationsreaktion im Polymerisationsgefäß vorgelegt werden.

**7.** Verfahren nach einem der Ansprüche 1 bis 6, **dadurch gekennzeichnet, dass** jeweils die Gesamtmenge an makromolekularer Wirtsverbindung und an Monomeren A vor Initiierung der Polymerisationsreaktion im Polymerisationsgefäß vorgelegt werden.

**8.** Verfahren nach einem der Ansprüche 1 bis 7, **dadurch gekennzeichnet, dass** die gegebenenfalls verbliebene Restmenge an makromolekularer Wirtsverbindung und/oder an Monomeren A und die Gesamtmengen bzw. die gegebenenfalls verbliebenen Restmengen der Monomeren B bis D dem Polymerisationsgefäß unter Polymerisationsbedingungen kontinuierlich mit gleichbleibenden Mengenströmen zudosiert werden.

**9.** Verfahren nach einem der Ansprüche 1 bis 8, **dadurch gekennzeichnet, dass** die gegebenenfalls verbliebene Restmenge an makromolekularer Wirtsverbindung und/oder an Monomeren A und die Gesamtmengen bzw. die gegebenenfalls verbliebenen Restmengen der Monomeren B bis D dem Polymerisationsgefäß unter Polymerisationsbedingungen als Monomerengemisch zudosiert werden.

**10.** Verfahren nach Anspruch 9, **dadurch gekennzeichnet, dass** die gegebenenfalls verbliebene Restmenge an makromolekularer Wirtsverbindung und/oder an Monomeren A und die Gesamtmengen bzw. die gegebenenfalls verbliebenen Restmengen der Monomeren B bis D dem Polymerisationsgefäß in Form einer wässrigen Monomerenemulsion zudosiert werden.

**11.** Verfahren nach einem der Ansprüche 1 bis 10, **dadurch gekennzeichnet, dass** als makromolekulare Wirtsverbindungen cyclische Oligosaccharide, nichtcyclische Oligosaccharide und/oder deren Derivate eingesetzt werden.

**12.** Verfahren nach Anspruch 11, **dadurch gekennzeichnet, dass** die cyclischen Oligosaccharide α-, β- und/oder γ-Cyclodextrine und die nichtcyclischen Oligosaccharide Stärken und/oder Stärkeabbauprodukte sind.

**13.** Verfahren nach Anspruch 12, **dadurch gekennzeichnet, dass** die Stärkeabbauprodukte hydrolytisch abgebaute Stärken mit einem Molekulargewicht von 1000 bis 30000 g/mol sind.

**14.** Wässrige Polymerisatdispersion erhältlich nach einem Verfahren gemäß einem der Ansprüche 1 bis 13.

**15.** Verwendung einer wässrigen Polymerisatdispersion gemäß Anspruch 14 zur Herstellung von Klebstoffen, Dichtmassen, Kunststoffputzen, Papierstreichmassen, Faservliesen, Anstrichmitteln und Beschichtungsmitteln für organische Substrate sowie zur Modifizierung von mineralischen Bindemitteln.

**16.** Verwendung einer wässrigen Polymerisatdispersion gemäß Anspruch 14 zur Herstellung von Haftklebstoffen.

**17.** Klebstoff, enthaltend eine wässrige Polymerisatdispersion gemäß Anspruch 14.

**18.** Haftklebstoff, enthaltend eine wässrige Polymerisatdispersion gemäß Anspruch 14.

**19.** Substrat, beschichtet mit einem Klebstoff gemäß Anspruch 17 oder einem Haftklebstoff gemäß Anspruch 18.

Europäisches Patentamt

# EUROPÄISCHER RECHERCHENBERICHT

Nummer der Anmeldung
EP 06 12 0685

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| D,X<br>A | EP 0 780 401 A (BASF AG [DE])<br>25. Juni 1997 (1997-06-25)<br>* Seite 2, Zeile 40 - Seite 3, Zeile 4 *<br>* Seite 3, Zeile 13 - Zeile 19 *<br>* Ansprüche; Beispiele 12,13 * | 14-19<br>1-13 | INV.<br>C08F2/22<br>C08F210/14<br>C08F257/02<br>C08F251/02<br>C09J151/00<br>C09J151/02<br>C09J123/00 |
| X<br>A | DE 103 45 094 A1 (BASF AG [DE])<br>21. April 2005 (2005-04-21)<br>* Ansprüche * | 14-19<br>1-13 | |
| X | EP 0 498 195 A2 (BASF AG [DE])<br>12. August 1992 (1992-08-12)<br>* Anspruch 1 * | 14-19 | |
| X | EP 1 191 041 A2 (BASF AG [DE])<br>27. März 2002 (2002-03-27)<br>* Ansprüche * | 14-19 | |
| D,A | DE 17 20 277 A1 (BP CHEM INT LTD)<br>23. März 1972 (1972-03-23)<br>* das ganze Dokument * | 1-19 | RECHERCHIERTE SACHGEBIETE (IPC)<br>C08F |

Der vorliegende Recherchenbericht wurde für alle Patentansprüche erstellt

1

| Recherchenort | Abschlußdatum der Recherche | Prüfer |
|---|---|---|
| Den Haag | 25. Januar 2007 | Kaumann, Edgar |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.** EP 06 12 0685

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-01-2007

| Im Recherchenbericht angeführtes Patentdokument | Datum der Veröffentlichung | Mitglied(er) der Patentfamilie | Datum der Veröffentlichung |
|---|---|---|---|
| EP 0780401 A | 25-06-1997 | BR 9606081 A | 01-09-1998 |
| | | CA 2192381 A1 | 22-06-1997 |
| | | CN 1156727 A | 13-08-1997 |
| | | DE 19548038 A1 | 26-06-1997 |
| | | JP 9183806 A | 15-07-1997 |
| DE 10345094 A1 | 21-04-2005 | CN 1856538 A | 01-11-2006 |
| | | CN 1860268 A | 08-11-2006 |
| EP 0498195 A2 | 12-08-1992 | CA 2060802 A1 | 09-08-1992 |
| | | DE 4103865 A1 | 13-08-1992 |
| | | JP 5070654 A | 23-03-1993 |
| EP 1191041 A2 | 27-03-2002 | AT 284902 T | 15-01-2005 |
| | | CN 1348755 A | 15-05-2002 |
| | | DE 10046927 A1 | 25-04-2002 |
| | | JP 2002155189 A | 28-05-2002 |
| | | US 2002131941 A1 | 19-09-2002 |
| DE 1720277 A1 | 23-03-1972 | GB 1104536 A | 28-02-1968 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 03042254 A
- WO 03091297 A
- EP 1384729 A
- US 4921898 A
- US 5070134 A
- US 5110856 A
- US 5629370 A
- EP 295727 A
- EP 757065 A
- EP 1114833 A
- DE 19620817 A
- DE 1720277 A
- US 5521266 A
- EP 780401 A
- DE 102005035692
- DE 4003422 A
- US 4699966 A
- WO 8908092 A
- JP 63197544 A
- JP 1007837 A
- EP 0441197 A
- US 4269749 A
- US 2520959 A
- US 3397165 A
- EP 771328 A
- DE 19624299 A
- DE 19621027 A
- DE 19741184 A
- DE 19741187 A
- DE 19805122 A
- DE 19828183 A
- DE 19839199 A
- DE 19840586 A
- DE 19847115 A

### In der Beschreibung aufgeführte Nicht-Patentliteratur

- **A. SEN et al.** *Journal American Chemical Society,* 2001, vol. 123, 12738-12739
- **B. KLUMPERMAN et al.** *Macromolecules,* 2004, vol. 37, 4406-4416
- **A. SEN et al.** *Journal of Polymer Science, Part A: Polymer Chemistry,* 2004, vol. 42 (24), 6175-6192
- **S.M. SAMOILOV.** *J. Macromol. Sci. Chem.,* 1983, vol. A19 (1), 107-122
- Emulsionspolymerisation in Encyclopedia of Polymer Science and Engineering. 1987, vol. 8, 659
- **D.C. BLACKLEY.** *High Polymer Latices,* 1966, vol. 1, 35
- **H. WARSON.** *The Applications of Synthetic Resin Emulsions,* 1972, 246
- **D. DIEDERICH.** *Chemie in unserer Zeit,* 1990, vol. 24, 135-142
- Emulsion Polymerisation. Interscience Publishers, 1965
- **F. HÖLSCHER.** Dispersionen synthetischer Hochpolymerer. Springer-Verlag, 1969
- **TAKAI et al.** *Journal of Organic Chemistry,* 1994, vol. 59 (11), 2967-2975
- **G. TEGGE.** Stärke und Stärkederivate. EAS Verlag, 1984, 173, 220
- Ullmann's Encyclopedia of Industrial Chemistry. vol. 25, 12-21
- Makromolekulare Stoffe. **HOUBEN-WEYL.** Methoden der organischen Chemie. Georg-Thieme-Verlag, 1961, vol. XIV/1, 411-420
- Makromolekulare Stoffe. **HOUBEN-WEYL.** Methoden der organischen Chemie. Georg-Thieme-Verlag, 1961, vol. XIV/1, 192-208
- **H. STACHE.** Tensid-Taschenbuch. Carl-Hanser-Verlag, 1981
- **MCCUTCHEON'S.** Emulsifiers & Detergents. MC Publishing Company, 1989
- **J. BRANDRUP ; E.H. IMMERGUT.** Polymerhandbook. John Weley & Sons, 1989, 133-141
- Ullmann's Encyclopedia of Industrial Chemistry. Verlag Chemie, 1992, 169
- **ZOSEL.** *Farbe und Lack,* 1976, vol. 82, 125-134
- **T.G. FOX.** Bull. Am. Phys. Soc. 1956, vol. 1, 123
- Ullmann's Encyclopädie der technischen Chemie. Verlag Chemie, 1980, vol. 19, 18
- **J. BRANDRUP ; E.H. IMMERGUT.** *Polymer Handbook,* 1966
- POLYMER HANDBOOK. J. Wiley, 1975
- POLYMER HANDBOOK. J. Wiley, 1989
- Ullmann's Cncyclopedia of Industrial Chemistry. Verlag Chemie, 1992, 169

- Analysis of Polymer Dispersions with an Eight-Cell-AUC-Multiplexer: High Resolution Particle Size Distribution and Density Gradient Techniques. **S.E. HARDING et al.** Analytical Ultracentrifugation in Biochemistry and Polymer Science. Royal Society of Chemistry, 1992, 147-175
- *Adäsive Age,* Juli 1987, 19-23
- *Polym. Mater. Sci. Eng.,* 1989, vol. 61, 588-592